# EUROPÄISCHE PATENTANMELDUNG

(11) **EP 1 994 975 A1**
(43) Veröffentlichungstag der Anmeldung: **26.11.2008**
(21) Anmeldenummer: 08014682.2
(22) Anmeldetag: 19.08.2008
(51) Int. Cl.: B01D 53/26

(54) **Gesamtheit von mehreren Trocknern für ein Gas**

(30) Priorität: 15.04.2008 DE 202008005228 U; 08.05.2008 DE 202008006346 U
(71) Anmelder: SPX Dehydration & Process Filtration GmbH, 47445 Moers (DE)
(72) Erfinder: Rädisch, Ingo K., 47665 Sonsbeck (DE); Ramacher, Joachim, 47445 Moers (DE)
(74) Vertreter: Schoenen, Norbert

(57) **Zusammenfassung**

Die Gesamtheit von mehreren Trocknern für ein Gas, insbesondere für Druckluft, wobei jeder Trockner einen Kältetrockner und einen damit kombinierten, in den Kreislauf des Kältetrockners integrierbaren Adsorptionstrockner umfasst, ist **dadurch gekennzeichnet, dass** die Trockner unterschiedliche Kältetrockner (20), aber jeweils den gleichen Adsorptionstrockner (21) umfassen.

Als Zeichnung für die Zusammenfassung wird Figur 3 vorgeschlagen.

## Beschreibung

Die Erfindung betrifft eine Gesamtheit von mehreren Trocknern für ein Gas, insbesondere für Druckluft, wobei jeder Trockner einen Kältetrockner und einen damit kombinierten, in den Kreislauf des Kältetrockners integrierbaren Adsorptionstrockner umfasst.

Derartige Trockner sind aus dem deutschen Gebrauchsmuster DE 92 01 713 U1 (Hankison GmbH, 1992) bekannt.

Bestimmte Produktionsverfahren verlangen eine zuverlässig aufbereitete, qualitativ hochwertige Druckluft (z. B. Instrumentenluft, Luft für pneumatische Steuerungen und verfahrenstechnische Prozesse, Förderluft für den Transport von pulverförmigen Materialien in Chemie, Pharmazie, Lebensmitteltechnik etc.). Die Luft soll technisch ölfrei und darüber hinaus sehr trocken sein. Drucktaupunkte von unter 0 °C bis herab zu -40 °C werden i. d. R. angestrebt. Wird das Arbeitsmedium Luft mit Drucktaupunkten oberhalb von +3 °C nun durch ein weit verzweigtes Rohrleitungsnetz oder streckenweise auch durch Freiluftleitungssysteme gefördert, sind Störungen durch eingefrorenes Kondensat nicht auszuschließen und besonders in den Wintermonaten an der Tagesordnung. Anlagenstillstände oder Qualitätseinbrüche innerhalb der Produktion, in jedem Fall aber erhebliche Folgekosten sind dann die unangenehmen und teuren Auswirkungen, die es zu vermeiden gilt.

Die wirtschaftliche Erzeugung von Drucktaupunkten unter 0 °C bei mittleren und großen Volumenströmen war bisher nur über "reine" Adsorptionstrockner möglich. Bei Volumenströmen über ca. 1.000 m³/h verwendete man weitestgehend warmregenerierende Adsorptionstrockner. Diese erscheinen zwar bezüglich ihres Anschaffungswertes im Vergleich zu kaltregenerierenden Adsorptionstrocknern zunächst als "teurer", rechnen sich jedoch schnell über den Unterhalt, das heißt durch ihre Betriebskosten.

In der Vergangenheit hatten daher verschiedene Bestrebungen das Ziel, Adsorptionstrockner mit Warmregeneration wirtschaftlicher betreiben zu können.

Mit der im eingangs genannten Gerauchsmuster DE 92 01 713 U1 beschriebenen Kombination eines Kältetrockners mit einem warmregenerierenden Adsorptionstrockner hatte die Anmelderin, damals unter dem Namen Hankison GmbH, eine erhebliche Verbesserung der Wirtschaftlichkeit für die Druckluftaufbereitung gefunden.

Bei dem bekannten kombinierten Kälte-Adsorptions-Trockner sind die beiden wesentlichen Einheiten, nämlich der Kältetrockner und der Adsorptionstrockner genau aufeinander abgestimmt, um die wirtschaftliche Zusammenarbeit der beiden Einheiten zu ermöglichen. Ein Anschluss dieses Adsorptionstrockners an einen anderen Kältetrockner, z. B. mit einer anderen Leistung, ist nicht möglich.

Der Erfindung liegt die Aufgabe zugrunde, das Prinzip des kombinierten Adsorptions-Kälte-Trockners erheblich vielseitiger anwendbar zu machen und damit für beliebige Trockner-Kombinationen eine deutliche Energieeinsparung und damit verbunden eine deutliche CO₂-Reduktion zu erreichen.

Diese Aufgabe wird bei der eingangs genannten Gesamtheit von Trocknern dadurch gelöst, dass die Trockner zwar unterschiedliche Kältetrockner, aber jeweils den gleichen modellabhängigen Adsorptionstrockner umfassen. Es handelt sich um eine Modulbauweise. Durch die Verwendung immer des gleichen modellabhängigen Adsorptionstrockners ist der Herstellungsaufwand, auch bei Kombination mit unterschiedlichen Kältetrocknern erheblich niedriger, als wenn für jeden unterschiedlichen Typ von Kältetrockner ein speziell darauf ausgelegter, ebenfalls unterschiedlicher Adsorptionstrockner vorgesehen ist.

Aus folgendem Grund ist es erfindungsgemäß möglich, immer den gleichen Adsorptionstrockner bei unterschiedlichen Kältetrocknern einzusetzen: Der Adsorptionstrockner benötigt lediglich den Betriebsdruck und den volumenstrom als Führungsgröße und muss nicht an die Umgebungsbedingungen seines jeweiligen Standorts angepasst sein. Der Kältetrockner hat die Aufgabe, den benötigten +3 °C Drucktaupunkt bei 100 % Sättigung bereitzustellen. Um die weltweit höchst unterschiedlichen Bedingungen für Umgebungstemperaturen und Drucklufteintrittstemperaturen zu bewältigen, sind unterschiedliche Kältetrockner mit unterschiedlichen Leistungen notwendig.

Weiterhin ist hervorzuheben, dass der Adsorptionstrockner zuschaltbar ist und dass der Trockner eine Steuereinheit aufweist, die bei Unterschreiten einer vorgegebenen Außentemperatur den Adsorptionstrockner zuschaltet.

Die Erfindung wird nachfolgend anhand eines Ausführungsbeispiels näher erläutert, wobei zum besseren Verständnis auch der Stand der Technik erläutert wird. Es zeigen
- Figur 1: ein Fließbild eines Kälte-Drucklufttrockners nach dem Stand der Technik,
- Figur 2: ein Fließbild eines Adsorptionstrockners, ebenfalls nach dem Stand der Technik, und
- Figur 3: ein Fließbild des erfindungsgemäßen kombinierten Kälte- und Adsorptionstrockners nach einem erfindungsgemäßen Ausführungsbeispiel.

In allen Zeichnungen haben gleiche Bezugszeichen die gleiche Bedeutung und werden daher gegebenenfalls nur einmal erläutert.

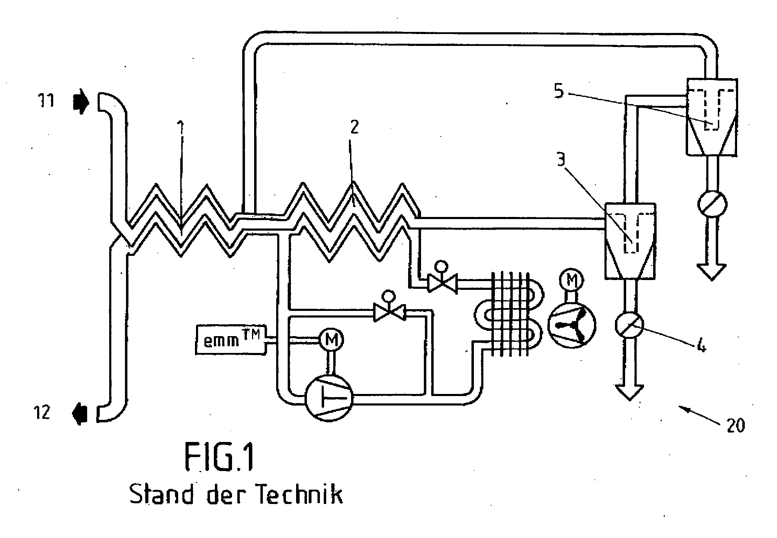

### Das Prinzip der Kälte-Drucklufttrockner (Figur 1):

Sie werden in Bereichen eingesetzt, in denen das Druckluftnetz ausschließlich Temperaturen oberhalb des Gefrierpunktes ausgesetzt ist. Warme, gesättigte Druckluft tritt in den Luft/Luft-Wärmetauscher 1 ein und wird im Kältemittel/Luft-Wärmetauscher 2 weiter abgekühlt, der mittels eines Expansionsventils gesteuert wird. Wasserdampf kondensiert zu Flüssigkeit und wird zuverlässig im Grad-9-Abscheider/Filter 3 von der Druckluft getrennt und durch den vollautomatisch arbeitenden Kondensatableiter 4 abgeschieden. Die nun kalte und trockene Druckluft wird genutzt, um im Luft/Luft-Wärmetauscher 1 die eintretende warme Druckluft abzukühlen.

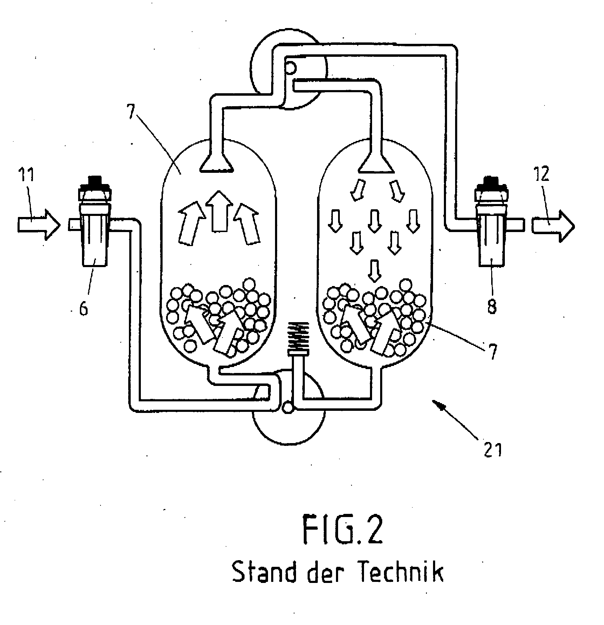

### Das Prinzip des Adsorptionstrockners (Figur 2):

Adsorptionstrockner kommen zum Einsatz, wenn das Druckluftsystem Temperaturen unterhalb des Gefrierpunktes ausgesetzt oder wenn für spezielle Applikationen ein besonders niedriger Drucktaupunkt erforderlich ist.

Die Luft wird durch einen mit Trockenmittel (aktiviertes Aluminiumoxid) befüllten Behälter 7 geführt, wo sich der Wasserdampf auf der Oberfläche des Trockenmittels anlagert.

Diese Trockenmittel können regeneriert und immer wieder eingesetzt werden. Die Trockner verfügen über zwei Adsorptionsbehälter 7. Die Druckluftzuführung wird umgeschaltet, so dass immer ein Behälter trocknet, während der andere Behälter, der nicht von Druckluft durchströmt wird, das Trockenmittel regeneriert. Bei warmregenerierenden Adsorptionstrocknern erfolgt mittels eines Gebläses 9 und einer meist elektrisch betriebenen Heizung 10 die Regeneration des Trockenmittels.

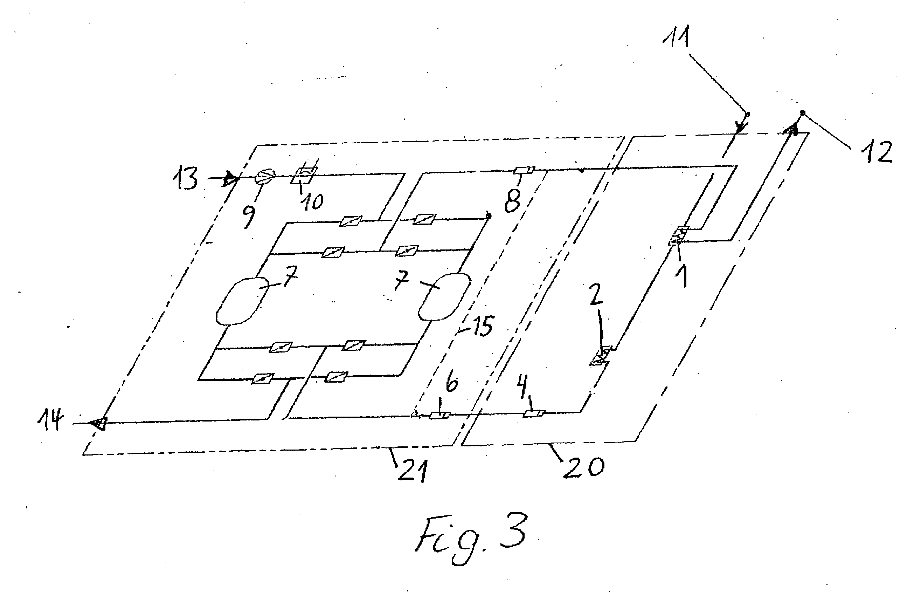

Ein Fließbild der erfindungsgemäßen Anordnung ist in Figur 3 dargestellt.

Das Funktionsprinzip: Die feuchte Luft tritt am Eintritt 11 mit einem Druck von 7 bar und mit einer Temperatur von rund +35 °C in den Kältetrockner 20 ein. Im Luft/Luft-Wärmetauscher 1 und nachfolgend im Kältemittel/Luft-Wärmetauscher 2 wird die Luft auf etwa +3 °C abgekühlt. Dabei kondensiert der Wasserdampf. Er lässt sich im integrierten Abscheidefilter 4 trennen. Die anschließende Filtration der Luft im Ölfeinstfilter 6 stellt die Ölfreiheit der Druckluft sicher. Nach dieser Vorbehandlung verlässt die Luft den Kältetrockner 20, der Drucktaupunkt (DTP) liegt nun bei +3 °C. Die Temperatur und der Taupunkt der Luft sind deckungsgleich. Jetzt ist das Medium feuchtigkeitsgesättigt, das heißt, die relative Feuchte der Luft beträgt 100 %. Der Idealzustand für das verwendete Adsorbent ist damit erreicht.

Danach tritt die Luft mit nahezu gleich bleibender Temperatur in den Adsorptionstrockner 21 ein. Hier findet durch Adsorption in den Trockenmittelbehältern 7 die Trocknung auf einen DTP, je nach Auslegung von -25 °C bis -40 °C, statt. Anschließend wird die Luft durch einen Partikelfilter 8, der den Trockenmittelabrieb zurückhält, dem wiederum im Kältetrockner 20 integrierten Luft/Luft-Wärmetauscher 1 zugeführt, den sie dann mit einer verarbeitungsgerechten Temperatur, beispielsweise von etwa +27 °C, und mit einem DTP von -40 °C und einem Druck von 6,6 bar am Austritt 12 verlässt.

Ein außentemperaturgesteuerter Druckluft-Bypass 15 ermöglicht, den Adsorptionstrockner 21 je nach Bedarf im Sommer zu umfahren und nur während der Wintermonate in Betrieb zu nehmen. Wie bereits erwähnt, rechtfertigen die weitaus günstigeren Betriebskosten die geringfügig höheren Investitionskosten des integrierten Kältetrockners.

Wesentlich für die Wirtschaftlichkeit der Kombination sind folgende Merkmale des Anlagenaufbaus:
- Niedrigste Betriebskosten im Vergleich zu üblichen Adsorptionstrocknern (warm- und kaltregenerierend)
- Wählbarer "Sommer-Winterbetrieb", der zusätzliches signifikantes Einsparpotential bietet
- Konstanter Drucktaupunkt
- Vermeidung von Drucktaupunkt- und Temperaturspitzen beim Umschalten der Trockenmittelbehälter 7
- Geringste Druckluftverluste
- Effizienteste Ölfiltration an der kältesten Stelle "Cold Coalescing"
- Längere Lebensdauer des Adsorbents durch extrem niedrige Regenerationstemperaturen und lange Zykluszeiten (16 h)
- Einsatz der besonders vorteilhaften HANKISON Digital Scroll® Technologie, sowie Automatic Purge Saving (APS) für die Energieeinsparung in Teillastsituationen
- Kompakte Bauweise, die beispielsweise auch in (On-Site) Containerstationen zur Anwendung kommen kann
- Optimale Austrittstemperaturen

Zusammengefasst lässt sich feststellen: Bei der erfindungsgemäßen Druckluftaufbereitung wird bis zu einem Drucktaupunkt von +3 °C das nach wie vor wirtschaftlichste System, der Kältetrockner, genutzt, welcher die Hauptwasserbeladung (85 %) aus dem Druckluftnetz entfernt. Die geschickte Integration des Adsorberteils, der wiederum bei der höchst möglichen Wasseraufnahmekapazität des Adsorbents eingebunden wird, erzeugt so mit einem Bruchteil an Adsorptionsmittelfüllung, an Energie für die Regenerations-Heizung sowie für das Regenerations-Gebläse (Energieeinsparung = CO₂-Reduktion) die gleiche Druckluftqualität wie ein für Standardbedingungen ausgelegter Adsorber. Dies ermöglicht eine moderne Druckluftaufbereitung bei geforderten Drucktaupunkten unter 0 °C und Volumenströmen ab etwa 1.000 m³/h.

Der Energie- und CO₂-Einspareffekt wird nochmals mit dem außentemperaturgesteuerten Druckluftbypass verstärkt, mit dem der Adsorberteil und die damit verbundenen Energiekosten im Sommer gänzlich weggeschaltet werden können.

### Bezugszeichenliste

- 1: Luft/Luft-Wärmetauscher
- 2: Kältemittel/Luft-Wärmetauscher
- 3: Grad-9-Abscheider/Filter
- 4: Kondensatableiter
- 5: Optionaler Grad-5-Öl-Fein-Filter
- 6: Ölfeinstfilter
- 7: Trockenmittelbehälter
- 8: Partikelfilter
- 9: Gebläse
- 10: Heizung
- 11: Drucklufteintritt
- 12: Druckluftaustritt
- 13: Frischlufteintritt
- 14: Regenerationsluftaustritt
- 15: Bypass
- 20: Kälte-Drucklufttrockner
- 21: Adsorptionstrockner warmregeneriert

## Patentansprüche

1. Gesamtheit von mehreren Trocknern für ein Gas, insbesondere für Druckluft, wobei jeder Trockner einen Kältetrockner und einen damit kombinierten, in den Kreislauf des Kältetrockners integrierbaren Adsorptionstrockner umfasst,
**dadurchgekennzeichnet,**
**dass** die Trockner unterschiedliche Kältetrockner (20), aber jeweils den gleichen Adsorptionstrockner (21) umfassen.

2. Trockner nach Anspruch 1,
**dadurch gekennzeichnet,**
**dass** der Adsorptionstrockner (21) zuschaltbar ist und dass der Trockner eine Steuereinheit aufweist, die bei Unterschreiten einer vorgegebenen Außentemperatur den Adsorptionstrockner (21) zuschaltet.
